# EUROPEAN PATENT APPLICATION

(11) **EP 1 320 254 A1**
(43) Date of publication of application: **18.06.2003**
(21) Application number: 01650147.0
(22) Date of filing: 12.12.2001
(51) Int. Cl.: H04N 3/15, H04N 5/225

(54) **An image processing system**

(71) Applicant: MV Research Limited, Dublin 18 (IE)
(72) Inventor: Mahon, James, Glasnevin, Dublin 9 (IE); Doherty, John, Drumcondra, Dublin 9 (IE); Harton, Andrew, Rathfarnham, Dublin 14 (IE); Smith, Patrick, Sandymount, Dublin 14 (IE); Dullaghan, Mark, Trim, County Meath (IE); Toftness, Richard, Loveland, Colorado (US)
(74) Representative: Weldon, Michael James

(57) **Abstract**

Four images are acquired from overlapping fields of view, and are combined to provide a single image of higher resolution. The camera and the object are displaced relative to each other in short moves of one half a pixel.

## Description

### Introduction

The invention relates to capture and processing of images from a subject such as an electronics circuit board.

At present, it is known to provide an image processing system comprising a camera such as a CCD camera, and an XY table with a gantry. The gantry moves either the subject or the camera. For example, the camera may have a resolution of 1280 x 1024 pixels, for a pixel size of 25 microns resolution. This gives a field of view of 32 x 25 mm. Thus, 100 views are required to inspect a circuit board of size 320 mm x 250 mm. The camera may have an acquisition time of, say, 50 msec. If the time for movement from view to view is on average 200 ms, the total time per view is 250 ms, giving four views per second and thus a total time of 25 secs for the full board (100 views).

If the board is to be inspected at 12.5 micron resolution, the prior approach has been to change the optics to reduce the pixel size to 12.5 microns. Thus 400 views are required. The camera acquisition will still take 50 msec, and the move time will reduce to 140 msec, allowing 5.2 views / second to be acquired. Thus the board can be inspected in 77 sec, more than 3 times longer than at 25 micron pixel size. In addition, there is the problem of having to split up large components that are greater than 16 x 12.5 mm but less then 32 x 25 mm.

The invention is therefore directed towards achieving a shorter time for full capture over a given area at higher resolution. The invention furthermore aims to achieve these objectives without needing to modify a conventional optical set-up of an inspection machine.

### Statements of Invention

According to the invention, there is provided an image processing system comprising a controller, a camera, movement means to change effective location of the camera with respect to a target object , and means for processing the captured images, wherein
the camera and the movement means comprise means for capturing a plurality of mutually offset initial images for a view, and
the image processing means comprises means for combining the initial images to provide a view image of higher resolution than that of the initial images.

In one embodiment, the initial images are mutually offset by a fraction of a pixel width.

In another embodiment, the initial images are offset by one half a pixel in X and Y directions.

In a further embodiment, the initial images are offset by a third of a pixel in X and Y directions.

In one embodiment, the invention provides the further step of interpolating additional pixels from the captured initial images.

In another embodiment, the controller comprises means for determining for which parts of an object multiple offset initial images are to be captured, whereby view images of differing resolutions are obtained for an object.

In a further embodiment, the controller comprises means for directing capture of initial images of different colours for a particular view image.

In one embodiment, the movement means comprises means for moving a lens with respect to the remainder of the camera.

In another embodiment, the movement means comprises means for moving the lens in X and Y directions.

In one embodiment, the movement means comprises means for tilting the lens.

### Detailed Description of the Invention

The invention will be more clearly understood from the following description of some embodiments thereof, given by way of example only with reference to the accompanying drawings in which:-
Figs. 1(a), 1(b), 1(c) and 1(d) are diagrams illustrating a camera movement sequence for acquisition of four images
Figs. 2(a), 2(b), 2(c) and 2(d) are diagrams illustrating the four images captured during the movement sequence 1(a) to 1(d).
Figs. 3(a) and 3(b) illustrate how a super-resolution image is assembled using pixels from the images 2(a) to 2(d).
Figs. 4(a) and 4(b) are diagrams illustrating a camera movement sequence for acquisition of 2 images.
Figs. 5(a) and 5(b) are diagrams illustrating the two images captured during the movement sequence 4(a) and 4(b).
Fig. 6(a) illustrates how a super-resolution image is formed using pixels from image 5(a) and 5(b), and Fig. 6(b) illustrates a further step of interpolation of missing pixels.
Fig. 7 is a diagram illustrating a camera movement sequence;
Figs. 8(a) and 8(b) are diagrams illustrating photosensitive areas for image capture; and
Figs. 9 to 12 are diagrams illustrating further movement sequences.

In one embodiment, a 4-image-super-resolution image is produced.

The imaging system comprises a camera employing an image sensor that is made up of a finite number of imaging elements. When imaging an object these pixels will have a finite resolution known as the pixel size. For a non-zoom optical system this is fixed. The system further comprises an x-y table with a gantry. The gantry moves either the object or the camera. It is only possible to produce a super-resolution image if the inspection system i.e. the camera or object is capable of movements which are less than one tenth of the pixel size.

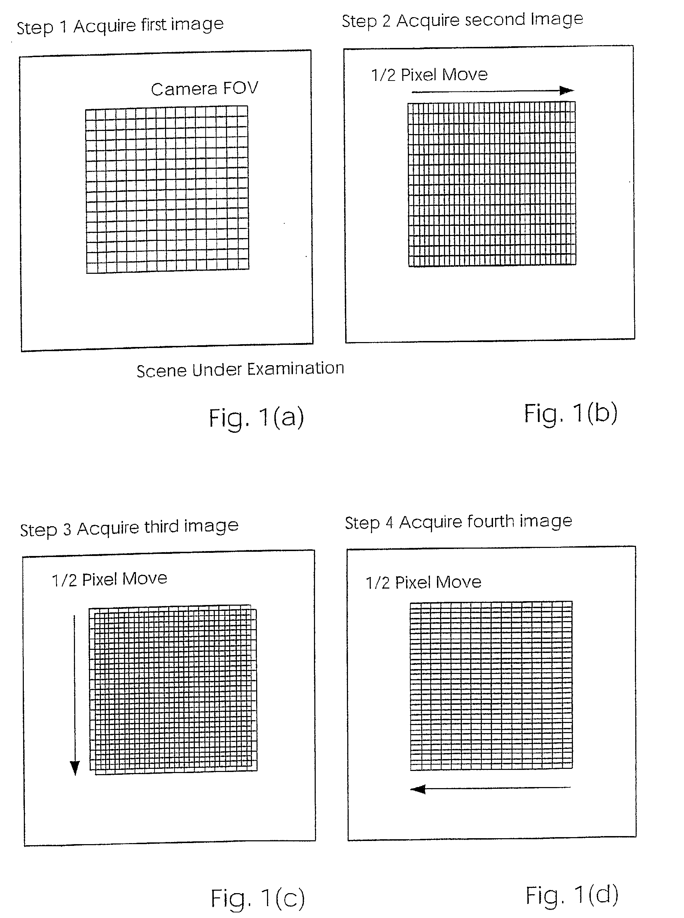

Figs. 1 to 3 illustrate the method for acquisition and generation of a super-resolution image based on four images. In this example four images are acquired from overlapping fields of view (FOV) and combined to produce a single super resolution image. The camera and object are displaced relative to each other in three short moves. The resultant image will have four times the resolution of the original camera image. It has twice the linear resolution of the original camera image.

Referring to Figs. 1(a) to 1(d) a camera movement sequence for acquisition of four images is illustrated. Figs. 1(a) to 1(d) show the FOV of the scene under examination, Fig 1(a) illustrates the initial FOV and Figs 1(b) to 1(d) show the FOV after movement.

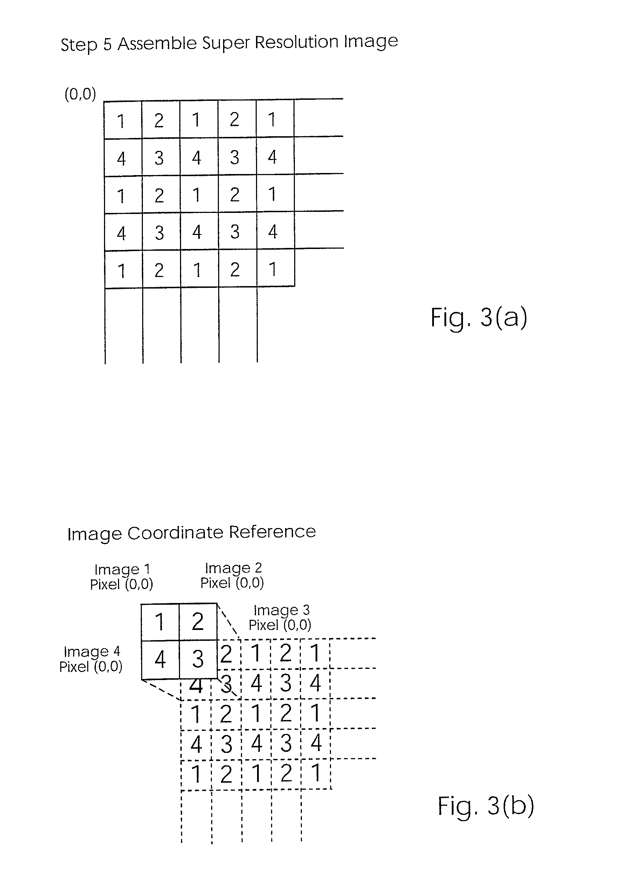

The following steps 1 to 4 of the sequence correspond to Figs. 1(a) to 1(d) respectively. Step 5 is illustrated by Figs. 3(a) and 3(b).
- Step 1:: Acquire and store first image.
- Step 2:: Move the camera left by ½ of a pixel width. Acquire and store the second image.
- Step 3:: Move the camera down by ½ of a pixel width. Acquire and store third image.
- Step 4:: Move the camera right by ½ of a pixel width. Acquire and store fourth image.

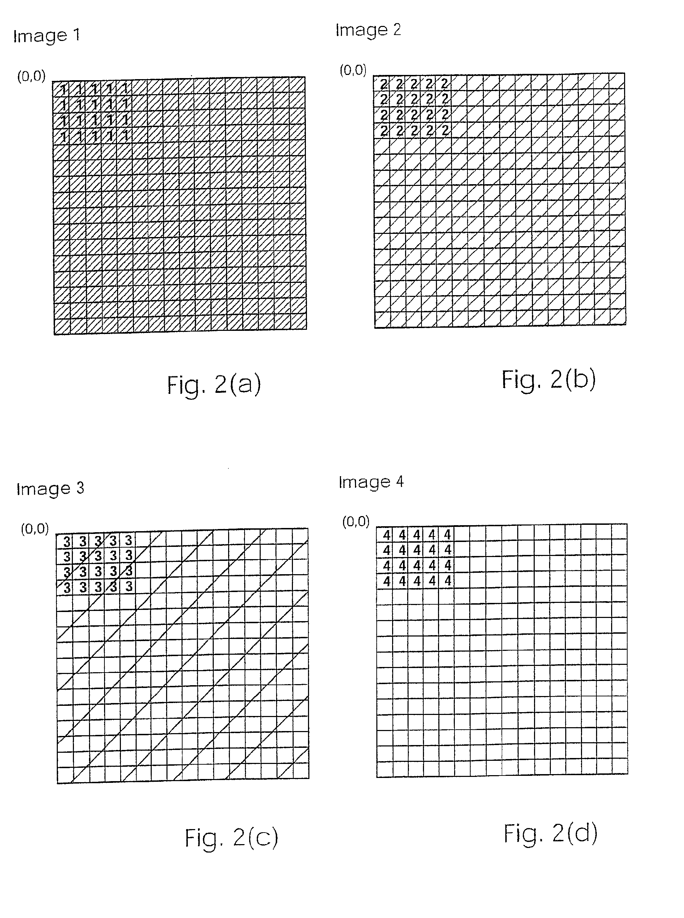

The memory of the inspection system will now contain four images. The four captured images 1, 2, 3 and 4 are illustrated in Figs. 2(a) to 2(d).
- Step 5:: Relates to the composition of a four-image super-resolution image. Each individual pixel in each of the images 1, 2, 3 and 4 becomes a pixel in the super-resolution image. Referring to Figs. 3 (a) and 3(b), the method for composition of the super-resolution image is as follows. Starting at the upper left-hand corner, (0,0), pixels are inserted into the super-resolution images according to the sequence shown in the Image Co-ordinate Reference. The insertion position of each pixel is made according to the move sequence used to acquire the images. This pattern is repeated until all pixel locations in the super-resolution image are filled.

In a further embodiment, a method is described whereby it is possible to create an image with four times the pixel count of the original while using only two captured images.

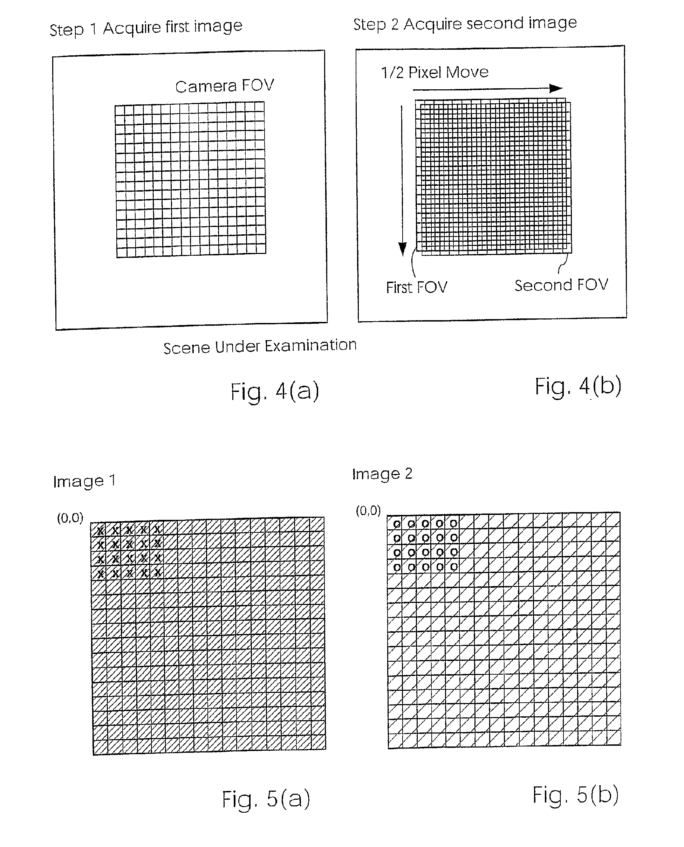

Figs. 4 to 6 illustrate a method for generation of a two-image super-resolution image. This method has the advantage that is twice as quick as the previously described four-image method. Figs. 4(a) and 4 (b) illustrate the sequence of movement for capturing two images. The process involves the following steps:
- Step 1:: Acquire and store first image.
- Step 2:: Move the camera left by ½ a pixel width and down by ½ a pixel width Acquire and store second image.

At this point the inspection system memory will contain two images, images 1 and 2 as illustrated in Figs. 5(a) and 5 (b).

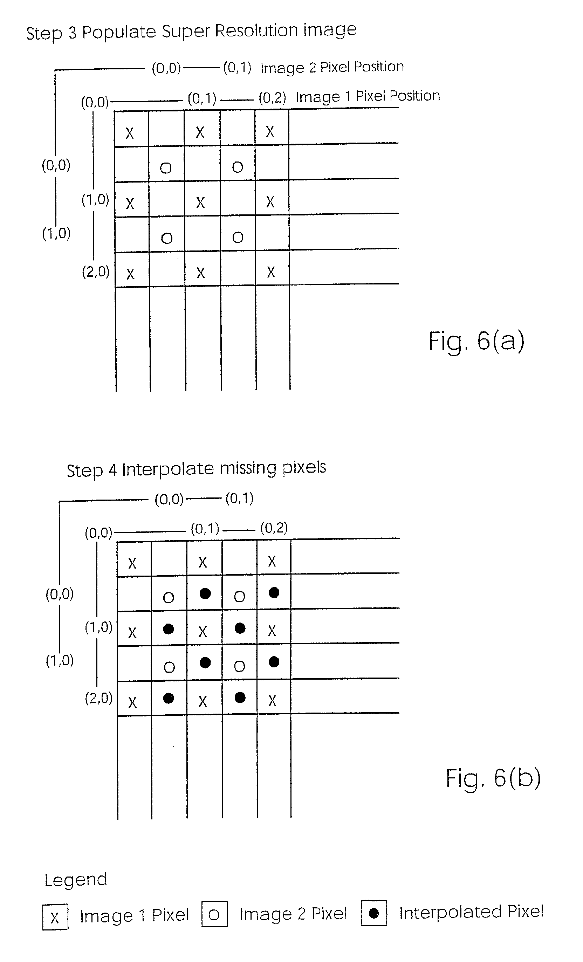

The method for creating the super-resolution image is illustrated by Figs 6(a) and 6(b). This involves the following steps:
- Step 3:: The super resolution images is populated. Pixels are inserted from images 5(a) and 5(b) according to a checker board pattern as shown in Fig. 6(a). Starting at the upper left-hand corner (0,0), firstly pixels from image 5(a) are inserted and next the pixels from image 5(b) are inserted until all pixel positions are filled.

In the method of this embodiment, which is based on the use of two overlapping images, it is noted, as illustrated in Fig 6(a) that half of the image contains no original image data. The missing pixels are interpolated as follows.
- Step 4:: As illustrated in Fig. 6(b), the missing pixels are interpolated from the surrounding north, south, east and west pixels. The interpolated pixel is then placed in the empty location.

The inspection system is not limited to the methods of acquisition of 2 or 4 images to create a super-resolution image. For example, if the camera movement system is capable of sufficiently fine movements, then the system may acquire 9 images (using moves of 1/3 of a pixel width) in order to produce a super resolution of three times the linear resolution of the original.

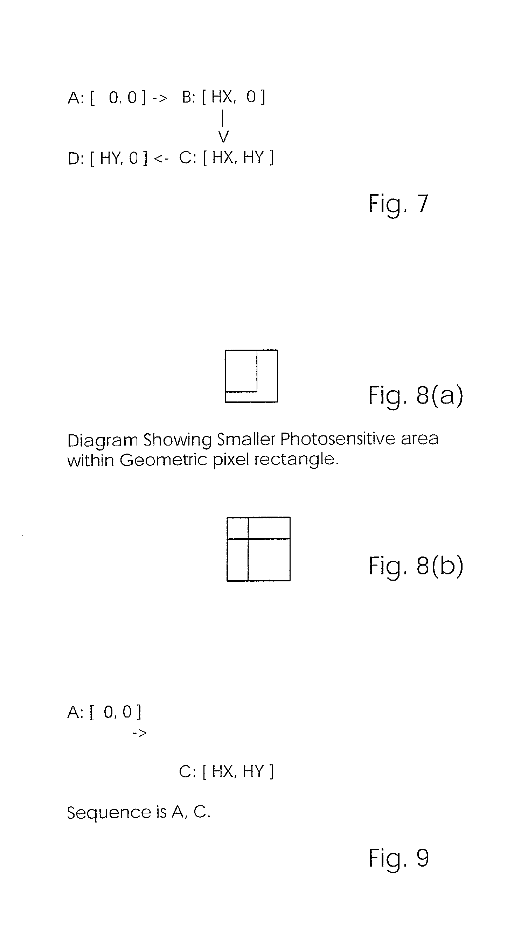

Further embodiments of the system are illustrated with reference to Figs. 7 to 12.

In one embodiment, referring back to the example outlined in the Introduction, the optical resolution is left at 25 microns. The camera is controlled to acquire four images at each "location", each 12.5 microns apart in X and Y. The four 25 micron resolution images are combined to form a single 12.5 micron image.

The view-to-view move time is unchanged at 200 msec, while the acquisition time is increased to 200 msec as we have to acquire 4 images. We can perform the small moves in less than the sensor readout time ( 45 msec ), and thus this has no effect on the total image acquisition time. Thus we can perform 2.5 views / second and inspect the board in 40 seconds, almost twice as fast as the prior "optical high resolution" situation.

Let us call the figure of 12.5 microns HX ( and also HY) for Half X pixel ( and Half Y pixel ). The move sequence is as set out in Fig. 7.

The moves are carried out in the sequence A B C D.

If the camera is twice as fast ( 25 msec to acquire an image ), we can inspect the board in 30 seconds or 3.3 views /second or 2.2 times as fast as the high resolution case.

There are three further advantages:
A: We can inspect larger parts without "breaking them up" between views which allows more robust vision algorithms to be used.
B: We do not need to modify the system hardware to achieve this increase in resolution, and thus it is easier to upgrade existing machines.
C: We can mix high and normal resolution views in the same inspection program in any order. Suppose we only had small parts in 20 percent of the views on the board, we would only have to acquire the extra images for these views, further speeding up the system.
   We can consider this a "mechanical zoom" system, which can be added to a system by a software addition.

The performance of the system is further enhanced by the "fill factor" of a CCD sensor when it is less than 100 %.

The surface of a CCD sensor is covered with pixels in a rectangular array, where each pixel consists of a photosensitive area and a non photosensitive area. The ratio of the photosensitive area to the total pixel size is called the "fill factor". This is usually less than 100%, typically 70-80%, but in some cases as low as 40%. The lower the value ( to a minimum of 25% ) the better as in that case, when we move the camera, we are actually seeing different object areas, as shown in Figs. 8(a) and 8(b).

The invention is not limited to the embodiments described. For example:-
A: The resolution is not necessarily doubled. It could be tripled by taking 9 images 1/3 pixel apart in X and Y.
B: Colour images may be acquired simultaneously by switching the lighting colours between each move, such as:-
   Green [0, 0]
   Red [1, 0]
   Green [1, 1]
   Blue [0, 1]

Thus, we could acquire colour and higher resolution at the same time. However, chromatic aberration might reduce the accuracy in this case.
C: It is not essential to acquire four images to double the resolution. The system may just acquire 2 images at [ 0, 0 ] and [ HX, HY ], and interpolate the other two points at [ 0, HY] and [ HX, 0 ].
   This would make the acquisition twice as fast as taking 4 images, and would give an intermediate amount of detail, between taking 1 image and taking 4 images.
   In addition, in this case, we can modify out standard horizontal and vertical vector reading algorithms, which read image regions N pixels wide to a linear vector of pixels, to only read the "real" pixels, and to ignore the interpolated pixels.
   In this case, the system can maintain the full resolution in X and Y, while only taking 2 images. The sequence is as shown in Fig. 9.

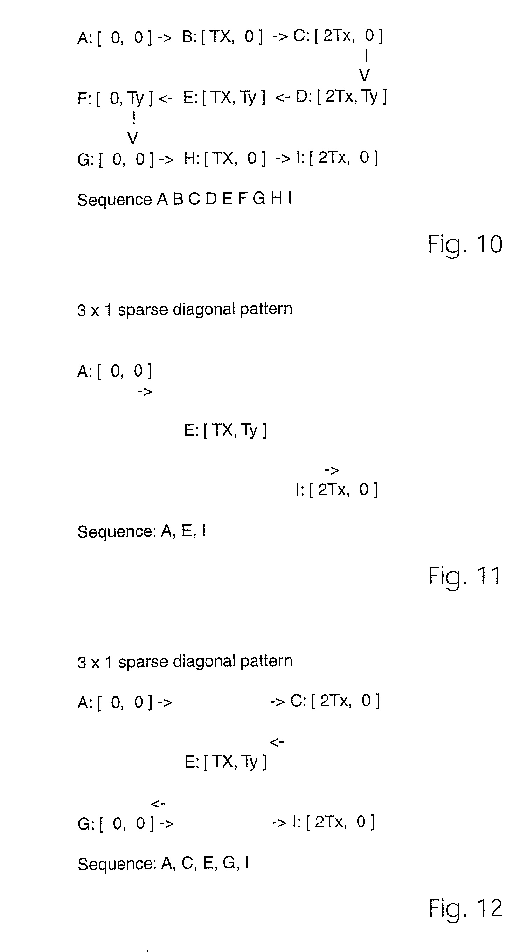

Similarly, it is not essential to acquire 9 images to triple the resolution of the system. It could acquire 3 images in a diagonal, or 5 images in two diagonals.
(TX = 1/3 X, TY= 1/3 Y ), and a sequence is illustrated in Fig. 10 for a 3 x 3 dense pattern. A 3 x 1 sparse patterns are shown in Figs. 11 and 12.

It is also envisaged that the lens may be moved with respect of the camera, without moving the larger and heavier XY table. This would tilt the lens a little as follows:

Suppose we are working at 2:1 reduction (i.e. the camera sensor pixel size is 12 microns and the object pixel size is 24 microns.
Half an object pixel would be 12 microns, so if we assume that the camera and lens tilt linearly, we have to shift the focal point of the lens by 6 microns. This can easily be achieved by using a piezo electric mover on the lens clamp. The advantage of this is that the XY table does not need to be moved and the mass to be moved is much less.

Alternately, the piezo mover could shift (rather than bend) the lens to achieve this movement in an XY extension tube system.

Also, the system can be used for "split axis" systems as well as XY table systems. A split axis system is one where one axis ( say X ) is used to move the camera ( at the "top" of the machine ) and the other axis ( say Y ) is used to move the object ( printed circuit board ) at the bottom of the machine. The principle is the same.

Also, the image processing functions may "know" which views require higher ( 2x or 3x ) resolution images and which do not, and only performs the high resolution on the views which require it. The may be a function implementing an algorithm for deciding which components require higher resolution inspection based on their body width or lead width, to enable the system to mark which views require high resolution inspection.

A function may read horizontal and vertical image vectors from the interpolated image, using only the "real" data.

If the system is to acquire a sequence of images with different characteristics ( for instance different coloured lighting or different angled lighting ), it does not have to acquire all the images with 4 shifted images, it might only use 4 images for the most important image and use 2 images for the others. For instance, suppose we were acquiring 3 images ( Red, Green and Blue ) to generate a colour image, where the red images was the most important image ( primary image ), it might acquire the red image with 4 shifted images and the green and blue with two each, thus reducing the number of images acquired from 12 to 8. It might even be possible to acquire 4, 1, 1 images to yield a total of 6 images.

The Piezo mover could be a single axis mover, where the Piezo axis would be parallel to the heavy axis of the xy table. This is because the light axis of the xytable is better at small moves than the heavy axis. Thus the light axis moves can be left to the xy table, while the heavy axis moves can be better done with a separate ( Piezo ) mover.

The invention is not limited to the embodiments described but may be varied in construction and detail.

## Claims

1. An image processing system comprising a controller, a camera, movement means to change effective location of the camera with respect to a target object, and means for processing the captured images, wherein
the camera and the movement means comprise means for capturing a plurality of mutually offset initial images for a view, and
the image processing means comprises means for combining the initial images to provide a view image of higher resolution than that of the initial images.

2. A system as claimed in claim 1, wherein the initial images are mutually offset by a fraction of a pixel width.

3. A system as claimed in claim 2, wherein the initial images are offset by one half a pixel in X and Y directions.

4. A system as claimed in claim 2, wherein the initial images are offset by a third of a pixel in X and Y directions.

5. A system as claimed in any preceding claim, comprising the further step of interpolating additional pixels from the captured initial images.

6. A system as claimed in any preceding claim, wherein the controller comprises means for determining for which parts of an object multiple offset initial images are to be captured, whereby view images of differing resolutions are obtained for an object.

7. A system as claimed in any preceding claim, wherein the controller comprises means for directing capture of initial images of different colours for a particular view image.

8. A system as claimed in any preceding claim, wherein the movement means comprises means for moving a lens with respect to the remainder of the camera.

9. A system as claimed in claim 8, wherein the movement means comprises means for moving the lens in X and Y directions.

10. A system as claimed in claims 8 or 9, wherein the movement means comprises means for tilting the lens.
